# EUROPÄISCHE PATENTSCHRIFT

(11) **EP 2 133 018 B1**
(45) Veröffentlichungstag und Bekanntmachung des Hinweises auf die Patenterteilung: **10.12.2014**
(21) Anmeldenummer: 09007098.8
(22) Anmeldetag: 28.05.2009
(51) Int. Cl.: A47L 9/24

(54) **Schlauch, insbesondere Staubsaugerschlauch, mit einem Knickschutz**
Hose, in particular vacuum cleaner hose, comprising an anti-kink means
Tuyau flexible, notamment tuyau flexible d'aspirateur, comprenant une protection anti-pli

(30) Priorität: 12.06.2008 DE 102008027927
(43) Veröffentlichungstag der Anmeldung: 16.12.2009
(73) Patentinhaber: TRUPLAST KUNSTSTOFFTECHNIK GMBH, 35428 Langgöns (DE)
(72) Erfinder: Linhart, Georg Peter, 61206 Wöllstadt (DE); Linhart, Christian Norbert, 35428 Langgöns (DE)
(74) Vertreter: Oppermann, Ewald

(56) Entgegenhaltungen:
- EP-A- 1 356 756
- EP-A2- 0 142 944
- DE-U1- 20 013 601
- US-A- 2 686 962
- US-A- 2 713 381
- US-A- 4 196 031
- US-A- 4 342 612
- US-A1- 2008 042 433

## Beschreibung

### TECHNISCHES GEBIET

Die Erfindung bezieht sich auf einen Schlauch, insbesondere Staubsaugerschlauch, mit einem Knickschutz, gemäß dem Oberbegriff des Patentanspruchs 1. Derartige Schläuche sind aus Kunststoffprofilstreifen unter Bildung mindestens eines außenliegenden, schraubenlinienförmig verlaufenden und nutenförmigen Kanals gewickelt. Dabei entsteht in axialer Richtung eine wellenförmige Struktur mit alternierend angeordneten Rippen und Nuten, die jeweils schraubenlinienförmig verlaufen, so dass zwischen zwei benachbarten Rippen ein nutenförmiger nach außen offener Kanal gebildet ist. Derartige Schläuche weisen eine beträchtliche Biegeflexibilität auf, wie sie beispielsweise im Staubsaugerbetrieb für Saugschläuche an sich wünschenswert ist.

### STAND DER TECHNIK

Wegen ihrer Biegeflexibilität neigen derartige Schläuche aber zum Abknicken, insbesondere an den Anschlussstellen an Geräten wie an Staubsaugergehäusen, aber auch wenn der Schlauch unter erheblicher Zugbelastung um Ecken gezogen wird. Dabei treten Querschnittsverengungen auf, welche die Saugleistung reduzieren. Auch bleibende Deformationen oder Beschädigungen des Schlauches können sich bei Abknickvorgängen einstellen.

Bekannte Knickschutzvorrichtungen stützen den Schlauch von außen, d.h. an den schraubenlinienförmig verlaufenden Rippen, und sind als rohrförmige Tüllen ausgebildet, die am Gerät befestigt sind und durch welche der Schlauch hindurchgeführt ist. Auch käfigartige Stützstrukturen sind hierfür bekannt.

Vorgeschlagen wurden auch schon Stützwendeln aus Stahldraht, die den Schlauch von außen und gegenläufig zu den schraubenlinienförmig verlaufenden Rippen umhüllen, d.h. wenn die Rippen nach Art eines Linksgewindes ausgebildet sind, verlaufen die Windungen der Stützwendel nach Art eines Rechtsgewindes. Diesen bekannten Knickschutzvorrichtungen fehlt die stabilisierende Wirkung für den Schlauch gegen die Neigung zum Kollabieren bei Biegebelastung, wodurch Durchflussverluste auftreten können. Ein Schlauch mit den Merkmalen des Oberbegriffs des Patentanspruchs 1 ist aus der Druckschrift US-A-4196031 bekannt.

### AUFGABENSTELLUNG

Der Erfindung liegt die Aufgabe zugrunde, einen Schlauch, insbesondere Staubsaugerschlauch, mit einem Knickschutz bereitzustellen, der den Schlauch an allen kritischen Stellen gegen Abknicken und Kollabieren schützen kann, ohne die Biegeflexibilität an diesen Stellen wesentlich herabzusetzen.

### DARSTELLUNG DER ERFINDUNG

Die gestellte Aufgabe wird erfindungsgemäß durch die Merkmale des Patentanspruchs 1 gelöst. Eine vorteilhafte Weiterbildung des erfindungsgemäßen Schlauchs ist im Patentanspruch 2 angegeben und nachfolgend ebenfalls näher erläutert.

Erfindungsgemäß ist bei einem Schlauch, insbesondere Staubsaugerschlauch, mit einem Knickschutz, welcher Schlauch aus Kunststoffprofilstreifen unter Bildung mindestens eines außenliegenden, schraubenlinienförmig verlaufenden und nutenförmigen Kanals gewickelt ist, während der Knickschutz gebildet ist aus einer sich mindestens über einen Teilbereich der Länge des Schlauchs erstreckenden Drahtwendel aus Federstahl, die sich in dem nutenförmigen Kanal befindet; die Drahtwendel von einem Ende des Schlauchs her in den nutenförmigen Kanal eingeschraubt, wobei das axial äußere Ende der Drahtwendel und das Ende des Schlauchs in einer auf den Schlauch aufgesteckten oder aufgeschraubten Muffe befestigt sind, wobei am äußeren Ende der Drahtwendel das Drahtende etwa radial oder axial nach außen abgebogen ist und in eine entsprechende radiale beziehungsweise axiale Bohrung der Muffe eingreift, oder wobei am äußeren Ende der Drahtwendel das Drahtende etwa radial nach innen abgebogen ist und bei aufgeschraubter Drahtwendel dem Schlauchende als den Aufschraubweg begrenzender Anschlag anliegt.

Durch die zwischen benachbarten Rippen in den nutenförmigen Kanal gewissermaßen eingebettete Drahtwendel erfährt der Schlauch ohne wesentliche Beeinträchtigung seiner Biegeflexibilität eine sehr wirksame Verstärkung gegen Abknicken und Kollabieren. Die Drahtwendel lässt sich leicht auf den Schlauch auf- bzw. in den nutenförmigen Kanal des Schlauchs einschrauben, wenn die Steigung der Drahtwendel mit der Steigung des schraubenlinienförmig verlaufenden und nutenförmigen Kanals bei gleichem Steigungssinn etwa übereinstimmt. Da die Drahtwendel an dem Ende des Schlauches fixiert ist, kann diese nicht vom Schlauch abgeschraubt oder abgezogen werden.

Die Drahtwendel kann sich über die gesamte Länge eines Staubsaugerschlauchs erstrecken, der dann insgesamt gegen Abknicken geschützt ist. Mindestens aber erstreckt sich die Drahtwendel über einen Teilbereich der Länge des Schlauchs. Dabei kann die Länge der Drahtwendel etwa entsprechend der Länge des gegen Abknicken zu schützenden Schlauchbereichs ausgeführt sein.

Das axial äußere Ende der Drahtwendel und ein Ende des Schlauchs sind in einer auf den Schlauch aufgesteckten oder aufgeschraubten Muffe befestigt, welche dem Anschluss des Schlauchs an ein Gerät, beispielsweise an ein Staubsaugergehäuse, oder an eine Schlauchkupplung dient.

Für die Befestigung des Schlauchendes und gleichzeitig des axial äußeren Endes der Drahtwendel in der Muffe stehen im Rahmen der Erfindung verschiedene Möglichkeiten zur Verfügung.

Die Muffe kann hierbei innen mit Gewinderippen versehen sein, mit welchen die Muffe auf das Ende des Schlauchs aufgeschraubt ist, wobei die Gewinderippen in den nutenförmigen Kanal eingreifen und den Endwindungen der Drahtwendel reibend angedrückt sind und diese dadurch am Schlauch fixieren.

Zusätzlich dazu oder als alleinige Befestigungsmaßnahme ist bei einer ersten Alternative am äußeren Ende der Drahtwendel das Drahtende etwa radial oder axial nach außen abgebogen und greift in eine entsprechende radiale beziehungsweise axiale Bohrung der Muffe ein. Wenn bei diesen Ausführungsformen das Drahtende in die zugehörige radiale beziehungsweise axiale Bohrung in der Muffe eingeführt wird, kann die Drahtwendel mittels der Muffe auf den Schlauch aufgeschraubt werden, bis schließlich das Schlauchende und die Endwindungen der Drahtwendel zur Befestigung durch Reibschluß in die Muffe eingetreten sind.

Bei einer zweiten Alternative ist am äußeren Ende der Drahtwendel das Drahtende etwa radial nach innen abgebogen und liegt bei aufgeschraubter Drahtwendel dem Schlauchende als den Aufschraubweg begrenzender Anschlag an.

### KURZE BESCHREIBUNG DER ZEICHNUNGEN

Weitere Einzelheiten der Erfindung werden nachfolgend anhand der Ausführungsbeispiele darstellenden Zeichnungen näher erläutert, wobei die Fig. 1 bis 5, 10 und 11 nicht die Erfindung zeigen.

In den Zeichnungen ist:
- Fig. 1: eine Seitenansicht eines an beiden Enden abgebrochen und im mittleren Bereich im Längsschnitt dargestellten eingängigen Staubsaugerschlauchs, mit einer sich über einen Teilbereich der gezeigten Schlauchlänge erstreckenden Drahtwendel,
- Fig. 2: eine Seitenansicht eines an beiden Enden abgebrochen und im mittleren Bereich im Längsschnitt dargestellten zweigängigen Staubsaugerschlauchs, mit einer sich über einen Teilbereich der gezeigten Schlauchlänge erstreckenden Drahtwendel,
- Fig. 3: ein abgebrochen und teilweise im Längsschnitt dargestelltes Schlauchende eines eingängigen Staubsaugerschlauchs, mit einer Drahtwendel und mit einer aufgesteckten und durch Kleben befestigten Muffe,
- Fig. 4: ein abgebrochen und teilweise im Längsschnitt dargestelltes Schlauchende eines zweigängigen Staubsaugerschlauchs, mit einer Drahtwendel und mit einer aufgesteckten und durch Kleben befestigten Muffe,
- Fig. 5: die Vorderansicht der in den Fig. 3 und 4 dargestellten Muffe,
- Fig. 6: ein abgebrochen und teilweise im Längsschnitt dargestelltes Schlauchende eines eingängigen Staubsaugerschlauchs, mit einer Drahtwendel und mit einer aufgeschraubten Muffe, mit welcher ein axial abgebogenes Drahtende zur Fixierung der Drahtwendel eingreift,
- Fig. 7: die Vorderansicht der Muffe gemäß Fig. 6,
- Fig. 8: ein abgebrochen und teilweise im Längsschnitt dargestelltes Schlauchende eines eingängigen Staubsaugerschlauchs, mit einer Drahtwendel und mit einer aufgeschraubten Muffe, mit welcher ein radial nach außen abgebogenes Drahtende zur Fixierung der Drahtwendel eingreift,
- Fig. 9: eine teilweise entsprechend der Schnittverlaufslinie IX - IX gemäß Fig. 8 aufgebrochene Vorderansicht der Muffe,
- Fig. 10: ein abgebrochen und teilweise im Längsschnitt dargestelltes Schlauchende eines eingängigen Staubsaugerschlauchs, mit einer Drahtwendel, deren Endwindungen sich radial erweiternd konisch gewendelt sind, und mit einer aufgeschraubten Muffe,
- Fig. 11: ein abgebrochen und teilweise im Längsschnitt dargestelltes Schlauchende eines eingängigen Staubsaugerschlauchs, mit einer Drahtwendel und mit einer an den Schlauch unter Erfassung der Endwindungen der Drahtwendel umfänglich angespritzten Muffe,
- Fig. 12: ein abgebrochen und teilweise im Längsschnitt dargestelltes Schlauchende ähnlich der Figur 8, jedoch mit einem etwa radial nach innen abgebogenen Drahtende,
- Fig. 13: eine teilweise entsprechend der Schnittverlaufslinie XIII-XIII gemäß Fig. 12 aufgebrochene Vorderansicht der Muffe und
- Fig. 14: einen im Längsschnitt dargestellten Geräteanschluß des in den Fig. 8 und 9 dargestellten Schlauchendes.

### DETAILLIERTE BESCHREIBUNG DER AUSFÜHRUNGSBEISPIELE

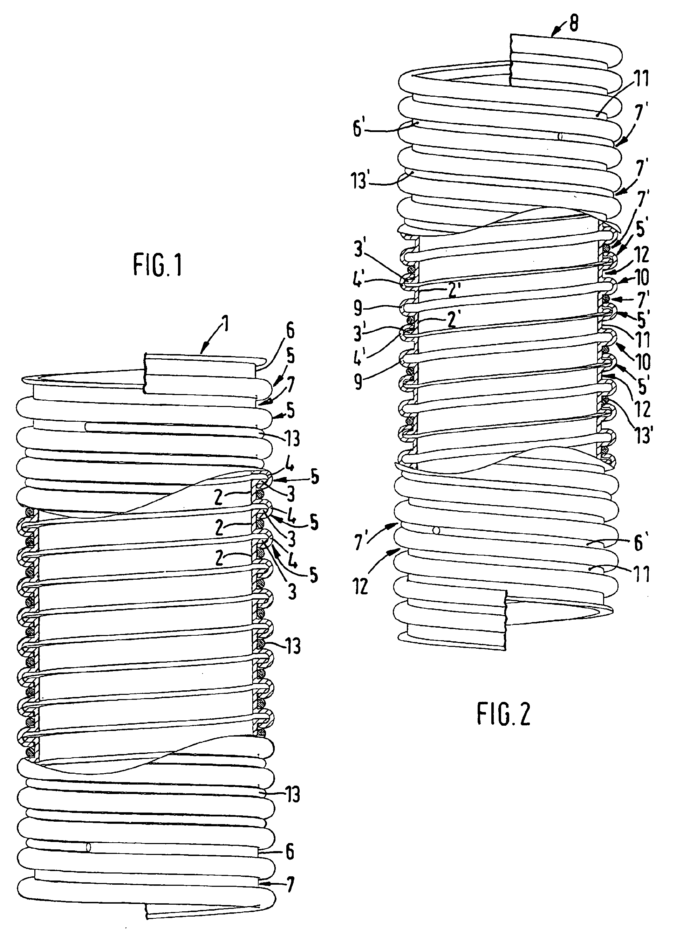

Zunächst wird auf die Fig. 1 und 2 Bezug genommen, in welchen zwei an sich bekannte Schlauchstrukturen gezeigt sind.

Der in Fig. 1 dargestellte eingängige Schlauch 1 ist aus einem Profilstreifen gewickelt, welcher eine die Schlauchinnenwandfläche definierende Basiswand 2 besitzt, an deren einem Ende ein nach außen gerichteter Steg 3 und an deren anderem Ende ein nach innen geöffnetes U-Profil 4 anschließt. Beim schlauchbildenden Wickelvorgang übergreift das U-Profil 4 den benachbarten Steg 3, wobei die aneinanderliegenden Flächen des Stegs 3 und des U-Profils 4 durch Klebung oder Schweißung fest miteinander verbunden werden. Dadurch entsteht in axialer Richtung außen eine wellenförmige Schlauchstruktur mit alternierend angeordneten Rippen 5 und Nuten 6, die jeweils schraubenlinienförmig verlaufen. Dadurch wird zwischen zwei benachbarten Rippen 5 ein nutenförmiger schraubenlinienförmig verlaufender Kanal 7 gebildet. Wegen dieses Kanals 7 werden derartige Schläuche 1 als eingängig bezeichnet.

Der in Fig. 2 dargestellte zweigängige Schlauch 8 ist aus einem Profilstreifen gewickelt, welcher zwei die Schlauchinnenwandfläche definierende Basiswände 2' besitzt, die durch ein U-Profil 9 miteinander verbunden sind. An das freie Ende der einen Basiswand 2' schließt sich ein nach außen gerichteter Steg 3' an, während an das freie Ende der anderen Basiswand 2' ein nach innen geöffnetes U-Profil 4' angeschlossen ist. Beim schlauchbildenden Wickelvorgang übergreift das U-Profil 4' den benachbarten Steg 3', wobei die aneinanderliegenden Flächen des Stegs 3' und des U-Profils 4' durch Klebung oder Schweißung fest miteinander verbunden werden. Dadurch entsteht in axialer Richtung außen wiederum eine wellenförmige Schlauchstruktur mit alternierend angeordneten Rippen 5' und 10, wobei die Rippen 10 von dem U-Profil 9 gebildet werden. Dadurch entstehen zwei schraubenlinienförmig verlaufende Nuten 6' und 11. Dementsprechend werden zwischen benachbarten Rippen 5', 10 zwei nutenförmige Kanäle 7' und 12 gebildet. Wegen dieser beiden Kanäle 7' und 12 werden derartige Schläuche als zweigängig bezeichnet.

Bei dem eingängigen Schlauch 1 gemäß Fig. 1 ist in den nutenförmigen Kanal 7 von einem Schlauchende her eine Drahtwendel 13 aus Federstahl eingeschraubt, die einen Teilbereich der Länge des Schlauches 1 mit einem wirksamen Knickschutz versieht. Wie ersichtlich ist, besitzt die Drahtwendel 13 einen Drahtdurchmesser, der zwischen den Rippen 5 Platz findet, der im gezeigten Beispiel kleiner ist als die Tiefe des nutenförmigen Kanals 7, so daß die Drahtwendel 13 nicht über den Außenumfang des Schlauches 1 übersteht. Der Drahtdurchmesser wird hauptsächlich von der Kanalgeometrie vorgegeben. Dabei spielt die Breite des Kanals die entscheidende Rolle. Der Drahtdurchmesser sollte nicht größer als die Kanalbreite sein, weil sonst der Schlauch "auf Block" ist.

Bei dem zweigängigen Schlauch 8 gemäß Fig. 2 ist nur in einen der nutenförmigen Kanäle 7' und 12, nämlich im gezeigten Beispiel in den Kanal 7', von einem Ende des Schlauches 8 her eine Drahtwendel 13' aus Federstahl eingeschraubt. Auch hier besitzt die Drahtwendel 13' einen Drahtdurchmesser, der zwischen den Rippen 5' und 10 Platz findet, der jedoch kleiner ist als die Tiefe des nutenförmigen Kanals 7', so daß die Drahtwendel 13' nicht über den Außenumfang des Schlauches 8 übersteht.

Zwar befindet sich bei dem zweigängigen Schlauch 8 gemäß Fig. 2 die Drahtwendel 13' nur in dem nutenförmigen Kanal 7', oder auch nur in dem nutenförmigen Kanal 12, so daß die Drahtwendel 13' im Vergleich zu der Drahtwendel 13 gemäß Fig. 1 eine größere Steigung aufweist, jedoch wird dadurch noch ein wirksamer Knickschutz erzielt. Allerdings kann in den nutenförmigen Kanal 12 zusätzlich eine zweite der Drahtwendel 13' entsprechende Drahtwendel eingeschraubt werden (nicht dargestellt).

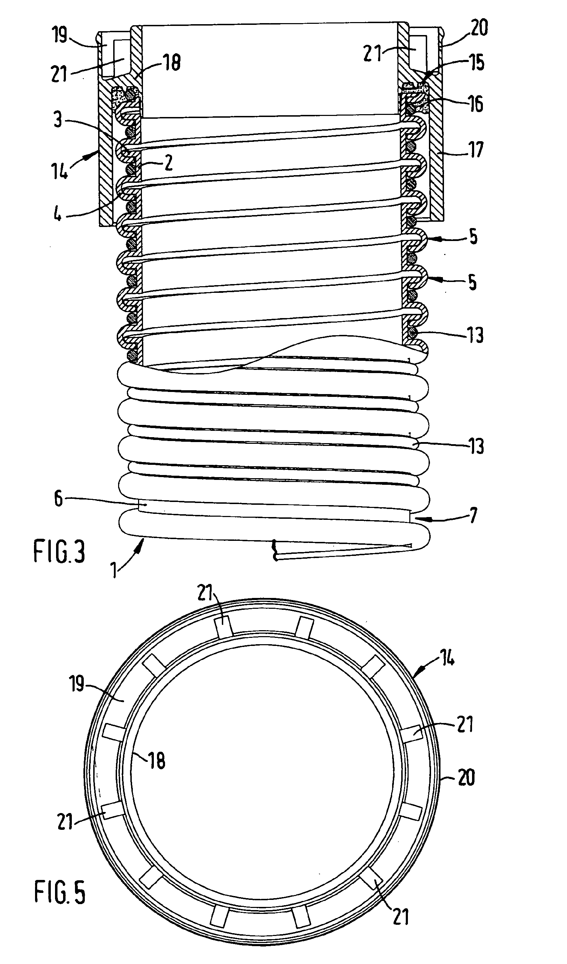

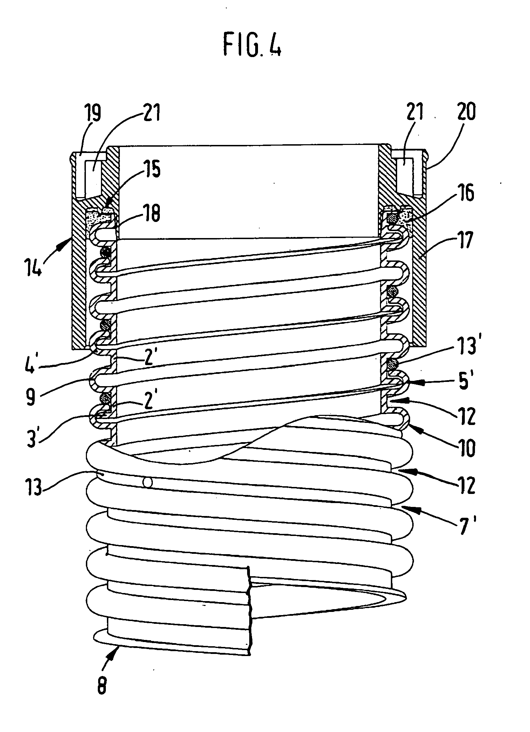

Bei den in den Fig. 3 bis 5 dargestellten Ausführungsbeispielen ist ein Knickschutz in Verbindung mit einer auf den Schlauch 1 bzw. 8 und die aufgeschraubte Drahtwendel 13 bzw. 13' axial aufgesteckten Muffe 14 vorgesehen. Die Muffe 14 weist einen zum Schlauchende hin offenen Ringraum 15 auf, in welchem das Ende des Schlauches 1 bzw. 8 und das axial äußere Ende der Drahtwendel 13 bzw. 13' mittels einer in den Ringraum 15 eingebrachten Klebermasse 16 befestigt sind. Der Ringraum wird außen von einer hohlzylindrischen Muffenwand 17, welche den Schlauch 1 bzw. 8 umschließt, und innen von einer Ringwand 18 der Muffe 14 begrenzt, die etwa an die Basiswände 2 bzw. 2' des schlauchbildenden Kunststoffprofilstreifens anschließt. An der Vorderseite der Muffe 14 befindet sich eine Ringausnehmung 19, durch welche aus der Muffenwand 17 eine federnde. Ringlippe 20 gebildet ist, welche für den Geräte- oder Kupplungsanschluß vorgesehen ist. In der Ringausnehmung 19 befindet sich eine Mehrzahl, im gezeichneten Beispiel zwölf, Versteifungsrippen 21, welche an die Ringwand 18 anschließen. Die Muffe 14 ist zweckmäßig aus einem geeigneten thermoplastischen Kunststoff spritzgeformt.

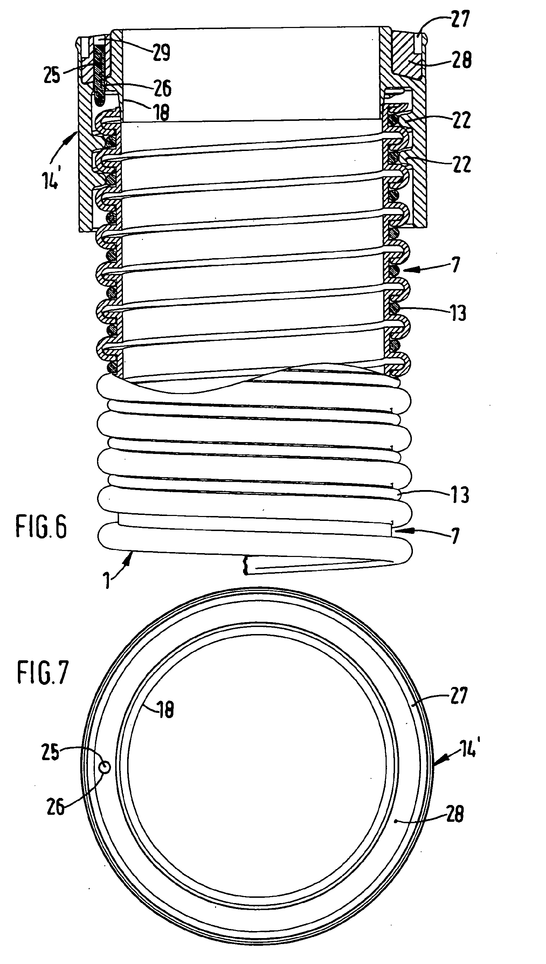

Die in den Fig. 6 bis 10 dargestellten Ausführungsbeispiele zeigen jeweils einen Knickschutz in Verbindung mit einer auf den Schlauch 1 und die aufgeschraubte Drahtwendel aufgeschraubte Muffe 14'. Hierbei ist die Muffe 14' innen mit Gewinderippen 22 versehen, mit welchen die Muffe 14' auf das Ende des Schlauches 1 aufgeschraubt ist. Hierbei greifen die Gewinderippen 22 in den nutenförmigen Kanal 7 ein und werden dabei den Endwindungen der Drahtwendel 13 reibend angedrückt, wodurch die betreffenden Endwindungen der Drahtwendel 13 bei den Ausführungsbeispielen gemäß der Fig. 6 bis 9 an den Nutgrund des nutenförmigen Kanals 7 angedrückt und dadurch am Schlauch fixiert werden. Auf diese Weise wird die Drahtwendel 13 zusammen mit dem Schlauch 1 in der Muffe sicher befestigt.

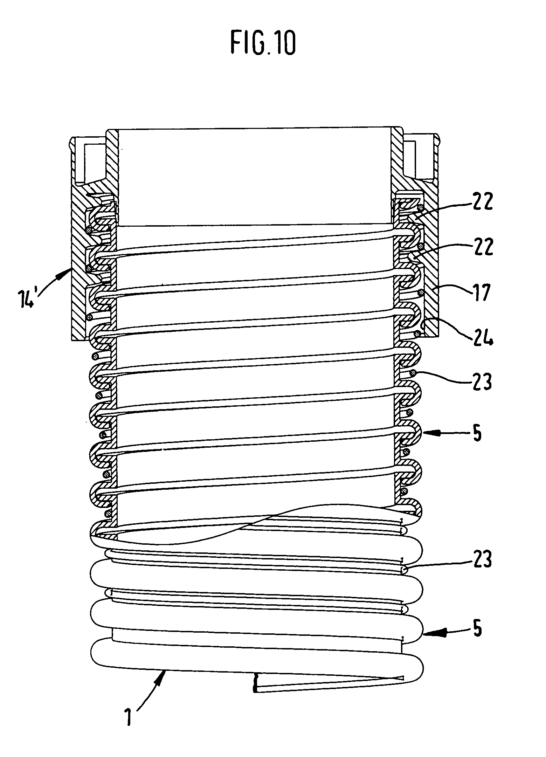

Im Ausführungsbeispiel gemäß Fig. 10 kommt eine Drahtwendel 23 aus Federstahl zum Einsatz, die an ihrem äußeren Ende mit ihren Endwindungen sich radial erweiternd konisch gewendelt ist, so daß sich zum Ende der Drahtwendel 23 hin der Durchmesser der Windungen stetig vergrößert. Wie Fig. 10 zu erkennen gibt, ist bei dieser Drahtwendel 23 der Drahtdurchmesser geringer als bei den anderen Ausführungsbeispielen, so daß die letzten im Durchmesser vergrößerten Windungen beim Aufschrauben der Muffe 14' auf den Schlauch 1 zwischen den Rippen 5, der Innenwandfläche 24 der Muffenwand 17 und den Gewinderippen 22 fest eingeklemmt werden, wodurch die Muffe 14' am Schlauchende unter gleichzeitiger Fixierung der Drahtwendel 23 befestigt ist.

Bei dem in den Fig. 6 und 7 dargestellten Ausführungsbeispiel ist als zusätzliche Sicherung am äußeren Ende der Drahtwendel 13 das Drahtende 25 etwa axial nach außen abgebogen und greift in eine entsprechende axiale Bohrung 26 der Muffe 14' ein. Weiterhin ist hierbei in der Vorderseite der Muffe 14' eine Ringausnehmung 27 vorgesehen, in welche ein Haltering 28 eingepreßt oder eingeklebt ist, der das axial abgebogene Drahtende 25 in einer Bohrung 29 aufnimmt, wenn diese mit der axialen Bohrung 26 in der Muffe 14' fluchtend ausgerichtet ist.

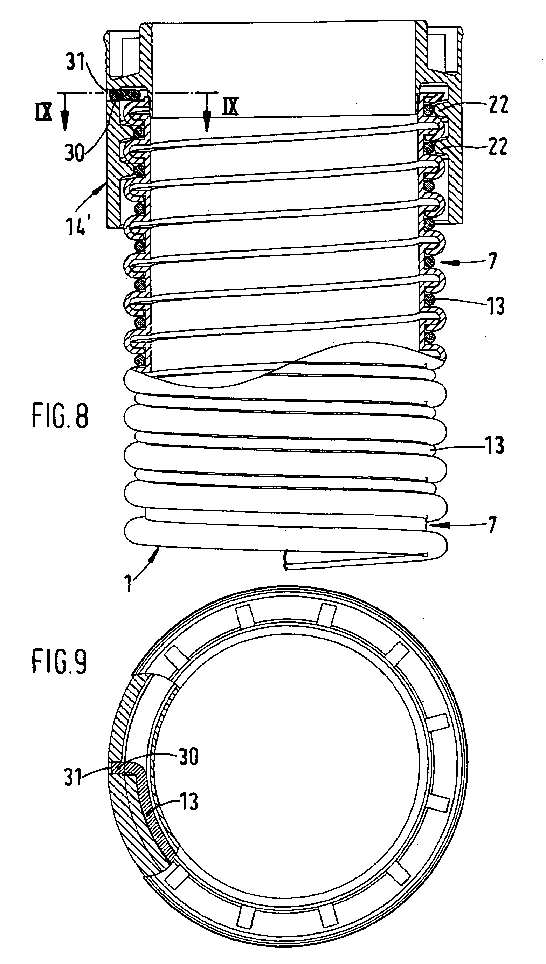

Das Ausführungsbeispiel entsprechend den Fig. 8 und 9 zeigt ein etwa radial nach außen abgebogenes Drahtende 30 am äußeren Ende der Drahtwendel 13, welches zur zusätzlichen Sicherung in eine radiale Bohrung 31 der Muffe 14' eingreift.

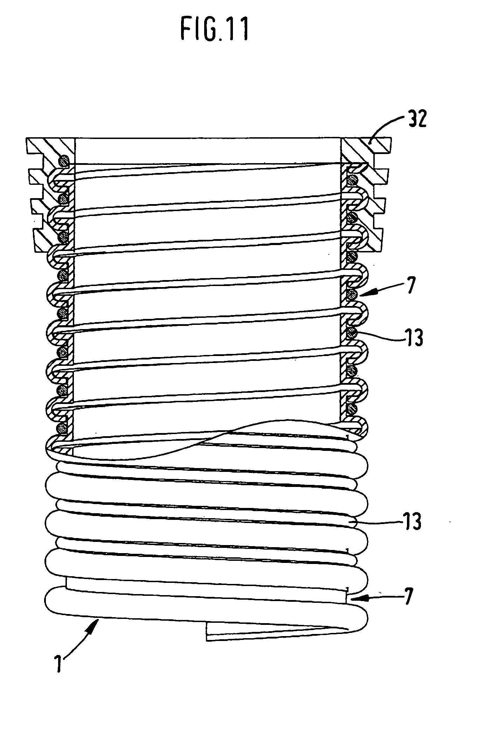

Gemäß dem in Fig. 11 gezeigten Ausführungsbeispiel ist das axial äußere Ende der Drahtwendel 13 durch eine dem Schlauch 1 umfänglich angespritzte Muffe 32 am Schlauch 1 befestigt. Die Muffe 32 ist aus einem geeigneten Kunststoff spritzgeformt, wofür TPE (thermoplastische Elastomere)-Kunststoffe besonders geeignet sind. Hierbei werden die davon erfaßten Endwindungen der Drahtwendel 13 fest in dem nutenförmigen Kanal 7 eingebettet und vom Kunststoff umschlossen.

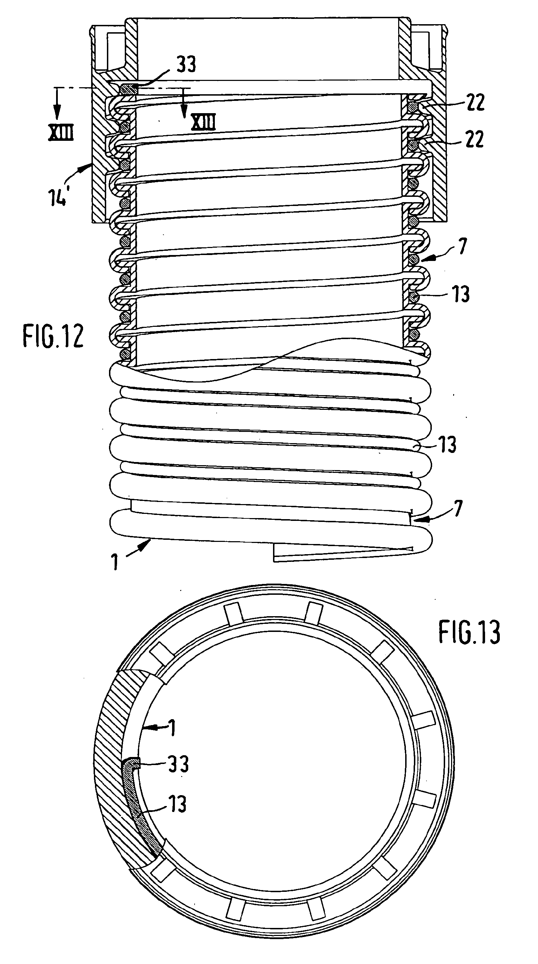

Das in den Fig. 12 und 13 gezeigte Ausführungsbeispiel unterscheidet sich von dem Ausführungsbeispiel gemäß der Fig. 8 und 9 dadurch, daß am äußeren Ende der Drahtwendel 13 das Drahtende 33 etwa radial nach innen abgebogen ist. Bei aufgeschraubter Drahtwendel 13 liegt das Drahtende 33 dem Schlauchende als den Aufschraubweg begrenzender Anschlag an, wie die Zeichnungen verdeutlichen. Dadurch wird verhindert, daß die Drahtwendel 13 weiter auf den Schlauch 1 aufgeschraubt werden kann, wenn sich die Muffe 14' auf dem Schlauch 1 befindet.

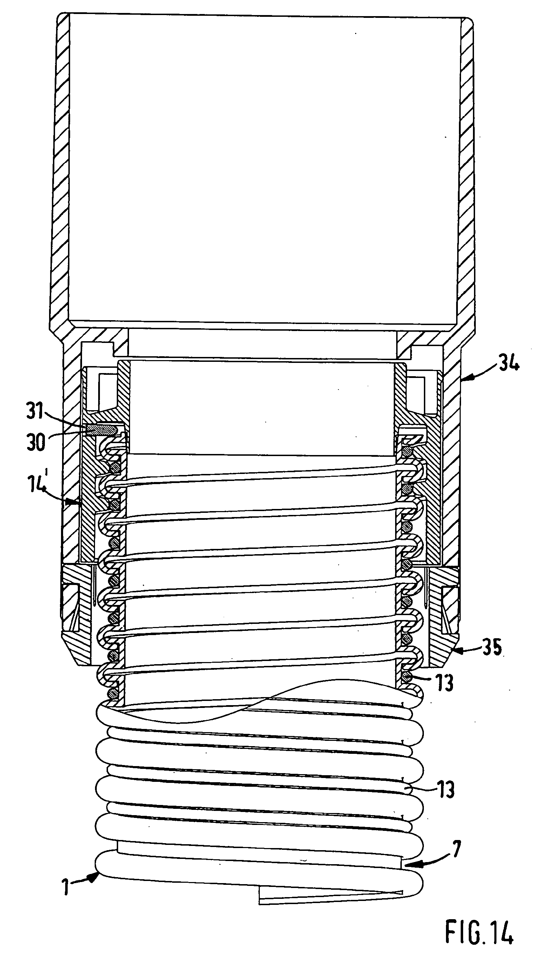

In Fig. 14 ist ein Geräteanschluß des in den Fig. 8 und 9 dargestellten Schlauchendes gezeigt. Die Drahtwendel 13 ist in der aufgeschraubten Muffe 14' auf die schon beschriebene Weise befestigt, so daß sie gegen Herausschrauben gesichert ist. Der Schlauch 1, die Drahtwendel 13 und die Muffe 14' sind gemeinsam drehbar in einer Geräteanschlußmuffe 34 gelagert. Ein sogenannter Klickring 35 verhindert, daß der Schlauch 1 zusammen mit der aufgeschraubten Muffe 14' und der Drahtwendel 13 aus der Geräteanschlußmuffe 34 herausgezogen werden kann, weil der Klickring 35 dabei als axialer Anschlag für die Muffe 14' dient.

Vorgeschlagen wird ein Knickschutz für Schläuche mit äußerer wellenförmiger Struktur, insbesondere für Staubsaugerschläuche. Derartige Schläuche weisen mindestens einen außenliegenden, schraubenlinienförmig verlaufenden und nutenförmigen Kanal auf. Der Knickschutz wird durch eine Drahtwendel aus Federstahl gebildet, die von einem Schlauchende her in den nutenförmigen Kanal eingeschraubt wird und an dem Schlauchende befestigt ist. Dieser Knickschutz, der über die gesamte Schlauchlänge oder nur partiell an den für Abknickvorgänge gefährdeten Schlauchstellen angebracht wird, beeinträchtigt nicht dessen Biegeflexibilität.

### BEZUGSZAHLENLISTE

- 1: eingängiger Schlauch
- 2, 2': Basiswand
- 3, 3': Steg
- 4, 4': U-Profil
- 5, 5': Rippen
- 6, 6': Nuten
- 7, 7': nutenförmiger Kanal
- 8: zweigängiger Schlauch
- 9: U-Profil
- 10: Rippen
- 11: Nuten
- 12: nutenförmiger Kanal
- 13, 13': Drahtwendel
- 14, 14': Muffe
- 15: Ringraum
- 16: Klebermasse
- 17: Muffenwand
- 18: Ringwand
- 19: Ringausnehmung
- 20: Ringlippe
- 21: Versteifungsrippen
- 22: Gewinderippen
- 23: Drahtwendel
- 24: Innenwandfläche
- 25: axial abgebogenes Drahtende
- 26: axiale Bohrung
- 27: Ringausnehmung
- 28: Haltering
- 29: Bohrung
- 30: radial nach außen abgebogenes Drahtende
- 31: radiale Bohrung
- 32: Muffe
- 33: radial nach innen abgebogenes Drahtende
- 34: Geräteanschlußmuffe
- 35: Klickring

## Patentansprüche

1. Schlauch (1), insbesondere Staubsaugerschlauch, mit einem Knickschutz,
wobei der Schlauch (1) aus Kunststoffprofilstreifen unter Bildung mindestens eines außenliegenden, schraubenlinienförmig verlaufenden und nutenförmigen Kanals (7) gewickelt ist, und
wobei der Knickschutz gebildet ist aus einer sich mindestens über einen Teilbereich der Länge des Schlauchs (1) erstreckenden Drahtwendel (13) aus Federstahl, die sich in dem nutenförmigen Kanal (7) befindet,
**dadurch gekennzeichnet, dass** die Drahtwendel (13) von einem Ende des Schlauchs (1) her in den nutenförmigen Kanal (7) eingeschraubt ist, wobei das axial äußere Ende der Drahtwendel (13) und das Ende des Schlauchs (1) in einer auf den Schlauch (1) aufgesteckten oder aufgeschraubten Muffe (14') befestigt sind,
wobei am äußeren Ende der Drahtwendel (13) das Drahtende (30; 25) etwa radial oder axial nach außen abgebogen ist und in eine entsprechende radiale beziehungsweise axiale Bohrung (31; 26) der Muffe (14') eingreift, oder
wobei am äußeren Ende der Drahtwendel (13) das Drahtende (33) etwa radial nach innen abgebogen ist und bei aufgeschraubter Drahtwendel (13) dem Schlauchende als den Aufschraubweg begrenzender Anschlag anliegt.

2. Schlauch (1) mit Knickschutz nach Anspruch 1, **dadurch gekennzeichnet, dass** die Muffe (14') innen mit Gewinderippen (22) versehen ist, mit welchen die Muffe (14') auf das Ende des Schlauchs (1) aufgeschraubt ist, wobei die Gewinderippen (22) in den nutenförmigen Kanal (7) eingreifen und den Endwindungen der Drahtwendel (13) reibend angedrückt sind und diese dadurch am Schlauch fixieren.

## Claims

1. Hose (1), in particular vacuum cleaner hose, comprising an anti-kink means,
wherein the hose (1) is wound from plastic profiled strips to form at least one external groove-like channel (7) which runs in a helical manner, and
wherein said anti-kink means comprises a wire coil (13) made from spring steel which extends at least over a sub-region of the length of the hose (1) and is located inside the groove-like channel,
**characterized in that** the wire coil (13) is screwed into the groove-like channel (7) from one end of the hose (1), wherein the axially outer end of the wire coil (13) and the end of the hose (1) are fixed in a sleeve (14') which is pushed or screwed onto the hose (1),
wherein at the outer end of the wire coil (13) the wire end (30; 25) is bent approximately radially or axially outwards and engages in a corresponding radial or axial bore (31; 26), respectively, of the sleeve (14'), or
wherein at the outer end of the wire coil (13) the wire end (33) is bent approximately radially inwards and, when the wire coil (13) is screwed on, bears at the hose end as a stop which limits the screw-on travel.

2. Hose (1) comprising an anti-kink means, according to claim 1, **characterized in that** the sleeve (14') is provided internally with thread ribs (22), by means of which the sleeve (14') is screwed onto the end of the hose (1), wherein the thread ribs (22) engage in the groove-like channel (7) and are pressed with friction against the end windings of the wire coil (13) and thus fix the latter to the hose.

## Revendications

1. Tuyau flexible (1), notamment tuyau flexible d'aspirateur, comprenant une protection anti-pli,
le tuyau flexible (1) étant réalisé par l'enroulement de bandes profilées de matière plastique en formant au moins un canal (7) en forme de rainure, qui est situé à l'extérieur et s'étend selon une ligne hélicoïdale, et la protection anti-pli étant formée par une hélice de fil (13) en acier à ressort, qui s'étend sur au moins une zone partielle de la longueur du tuyau flexible (1), et se trouve dans le canal (7) en forme de rainure,
**caractérisé en ce que** l'hélice de fil (13) est vissée dans le canal (7) en forme de rainure, à partir d'une extrémité du tuyau flexible (1), l'extrémité axialement extérieure de l'hélice de fil (13) et l'extrémité du tuyau flexible (1) étant fixées dans un manchon (14') emmanché ou vissé sur le tuyau flexible (1), et l'extrémité de fil (30; 25) est coudée environ radialement ou axialement vers l'extérieur au niveau de l'extrémité extérieure de l'hélice de fil (13), et s'engage dans un alésage radial respectivement axial (31; 26) du manchon (14'), ou
l'extrémité de fil (33) est coudée environ radialement vers l'intérieur au niveau de l'extrémité extérieure de l'hélice de fil (13), et s'appuie contre l'extrémité du tuyau flexible, en tant que butée limitant la course de vissage, lorsque l'hélice de fil (13) est montée en étant vissée.

2. Tuyau flexible (1) comprenant une protection anti-pli, selon la revendication 1, **caractérisé en ce que** le manchon (14') est pourvu, à l'intérieur, de nervures de filetage (22) par lesquelles le manchon (14') est vissé sur l'extrémité du tuyau flexible (1), les nervures de filetage (22) s'engageant dans le canal (7) en forme de rainure et étant pressées par friction contre les spires terminales de l'hélice de fil (13) en fixant ainsi celles-ci au tuyau flexible.
